Europäisches Patentamt

European Patent Office

Office européen des brevets

(11) Publication number: **0 363 698**
**A2**

## (12) EUROPEAN PATENT APPLICATION

(21) Application number: **89117427.8**

(22) Date of filing: **21.09.89**

(51) Int. Cl.⁵: **C08G 81/00 , C08L 77/08**

The title of the invention has been amended (Guidelines for Examination in the EPO, A-III, 7.3).

(30) Priority: **21.09.88 US 247201**

(43) Date of publication of application:
**18.04.90 Bulletin 90/16**

(84) Designated Contracting States:
**AT BE CH DE ES FR GB IT LI NL SE**

(71) Applicant: **BASF Corporation**
**9 Campus Drive**
**Parsippany, NJ 07054(US)**

(72) Inventor: **El-Hefnawi, Sobhy**
**272 65th Street**
**Brooklyn New York 11220(US)**
Inventor: **Shah, Shailesh C.**
**644 W. Beverwyck Place**
**Paramus New Jersey 07652(US)**
Inventor: **Wasyliw, Basil**
**225 Ellery Avenue**
**Newark New Jersey 07016(US)**

(74) Representative: **Welzel, Gunther, Dr. et al**
**c/o BASF Aktiengesellschaft**
**Carl-Bosch-Strasse 38**
**D-6700 Ludwigshafen(DE)**

(54) Modified carboxylated polyamide compositions.

(57) New modified carboxylated polyamide compositions are obtainable by fusing a mixture of a polyamide of the type usable for printing inks (A) and an carboxylated resin and/or carboxylated polymer and in particular mixtures thereof, such as a maleated rosin and an acrylic acid or methacrylic acid copolymer at a temperature of 180-250° C. In the preferred process the modified carboxylated polyamide compositions are synthesized in a two-step process in which the polyamide is first condensed (fused) with a carboxylated rosin and this intermediate product is then further condensed (fused) with an copolymer of an olefinically unsaturated acid having 3-5 C-atoms being soluble in an aqueous alkaline solvent. The resulting compositions can be used in water or solvent ink systems having improved properties.

EP 0 363 698 A2

## Modified Polyamide Compositions, their Preparation and Printing Inks containing them

The present invention relates to modified polyamide compositions, their preparation and use.

The modifications of synthetic polyamide products of high average molecular weight, such as fibers, films and fabrics composed of nylon, as well as of natural polyamide products such as wool, silk, and natural leather, by means of a graft polymerization treatment, particularly with acrylic and methacrylic acids, has been described in various references such as U.S. Patents 3,297,471, 4,369,036 and 3,188,228. The objective of these patents is to impart to the crystalline, solvent-insoluble polyamide product desirable properties such as hygroscopicity, thermal stability, antistatic properties, and soil resistance, without essentially changing the solubility properties of the polyamide. This is achieved by grafting acrylic materials, at various levels of efficiency, onto the polyamide product by either chemical or physical processes, followed by the removal of ungrafted acrylic oligomers and (co)polymers as well as of unreacted acrylic monomers.

In EP-A 194,889 a process for modifying a polyamide resin is disclosed by reaction of a polyamide with a vinyl monomer in an alcohol solution in the presence of an initiator for free radical grafting such as an organic peroxide at a reaction temperature in the range from about 100° C to about 115° C. This reaction leads to a reaction mixture containing a blend of resinous materials, including unreated polyamide resin, a novel graft polymer, and associatively-formed but ungrafted addition polymer.

This prior grafting polymerization technique has resulted in the preparation of modified polyamides useful in ink formulations. However, these modified polyamides have some disadvantages, e.g. some residual toxicity due to residual monomers and the presence of some residual peroxide catalyst decomposition products.

We have now found that modified carboxylated polyamide compositions which do not have the said disadvantages are obtainable by condensing a mixture of a polyamide (A) and an organic compound containing carboxyl groups (B) at a temperature of about 180-250° C.

Another object of this invention is to disclose a process for the manufacture of such modified carboxylated polyamide compositions which is easily carried out and makes it possible to modify commercially available polyamides, so far useful as vehicles in solvent laminating inks or solvent inks for surface printing on plastic films, by condensation reactions such as amidation, imidation or transamidation to such an extent that the resulting compositions are water-borne and suitable as vehicles in aqueous ink systems.

According to the process of this invention the polyamide of choice (A) is fused in a desired ratio, preferably with an amount of 70 to 120% w/w of the amount of the polyamide, of at least one organic compound containing carboxyl groups (B) at a temperature of about 180-250° C and preferably about 200-240° C.

A particular object of this invention is to modify the polyamides by two different carboxylated resins and/or carboxylated polymers e.g. by using mixtures of such carboxylated resins and/or polymers. The preferred process of this invention is to prepare the modified polyamide by a two-step fusion process in which a polyamide is first condensed with a carboxylated resin, preferably with a carboxylated rosin, such as maleated or fumarated rosin, and this intermediate is then further condensed with an carboxylated polymer, in particular with an copolymer of an olefinically unsaturated acid having 3-5 carbon atoms, preferably having an acid number of 50 to 500 and in particular 100-300, such as a styrene and/or acrylic or methacryclic ester/(meth)acrylic acid copolymer and/or salts thereof. Preferred copolymers have a weight average molecular weight of 1,000-300,000 and in particular 1,000-50,000. Thus, in addition to acquiring useful properties of e.g. the rosin, such as high gloss and water resistance, the polyamide is made compatible with the aqueous pigment bases that contain acrylic or styrene/acrylic carboxylic polyelectrolyte pigment dispersants, commonly used by the ink industry. The resulting modified polyamide-acrylics are compatible with a large number of ink vehicles available from various suppliers which contain styrenated acrylic solution resins or acrylic solution resins.

The fusion reaction is carried on long enough to produce a new carboxylated polyamide resin (reaction product) whioh after reaction with ammonia and/or amines can be dissolved or dispersed in water, or in a compliant water/alcohol solution. Preferably the fusion reaction is carried out for a time period of about 1-3 hours. The resulting reaction products have a weight average molecular weight of from about 1,000 to about 200,000 and more preferably from about 1,500 to about 40,000.

As polyamides (A) for the manufacture of the modified carboxylated polyamide compositions according to this invention the polyamides suitable for use in printing inks can be used. Suitable are e.g. polyamides made from polymeric fatty acids, alkylene diamines and monocarboxylic acids as described in US-A

2

3,412,115 or polyamides used in flexographic printing inks and made from dimerized fatty acids, dicarboxylic acids, polyamines and monocarboxylic acids.

Preferred dicarboxylic acids for the production of such polyamides are aliphatic and cycloaliphatic dicarboxylic acids having 6 to 12 carbon atoms, and preferred diamines and polyamines are aliphatic or cycloaliphatic, such as ethylendiamine, ethylenetriamine and cyclohexane-bis(methylamine).

Very suitable polyamides are prepared from dimerized fatty acid, azelaic acid and/or adipic acid, polymethylene diamine and propionic acid. Preferred polyamides for the preparation of the composition of this invention are soluble in alcohols such as isopropanol or solvent mixtures containing alcohol.

Suitable commercially available amorphous polyamides are e.g. Versamide® made by Schering AG or General Mills, Inc., which are made by polycondensation of di- and trimerized unsaturated fatty acids and polyamine and are suitable for printing inks, furthermore Polyamide GAX-340 or Macromelt® hot-melt adhesives made by Henkel, such as Macromelt® 6238, having a viscosity of 4500 at a temperature of 210° C, or Macromelt® 6239 or 6240.

Preferred organic compounds containing carboxyl groups (B1) are maleated, fumarated, itaconated or acrylated resins or generally speaking reaction products/adducts of rosin and olefinically unsaturated organic acids, preferably those having 3 to 6 carbon atoms or anhydrides thereof, such as acrylic acid or maleic anhydride. Maleated rosin is preferably made by Diels Alder addition of 1 mole of rosin and 1 mole of maleic anhydride at a temperature of about 130-250° C, preferably 175-200° C.

Suitable rosin products are gum rosin and tall oil rosin, such as the tall oil rosin ACINTOL® sold by Arizona Chemical Company, New York. A commercially available rosin maleic anhydride adduct is Arochem® 404, sold by Ashland Chemical Co.

Other very suitable organic compounds containing carboxyl groups (B2) for the manufacture of the modified carboxylated polyamides of this invention are styrene or acrylic copolymers having carboxyl groups which are soluble in an aqueous alkaline solvent like aqueous ammonia, such as copolymers of styrene and maleic anhydride (monomer ratio 1/1 to 3/1) having an acid number in the range of from 100 to 500, preferably 150-250, and a melting range of from about 50 to about 170, e.g. the SMA-3000 Styrene/Maleic anhydride Resin of ARCO/Chemical Company.

The resulting modified carboxylated polyamide compositions of this invention have, in comparison to the usual polyamides used in inks, an increased glass temperature, which improves their heat and block resistance. The applications in which they can be used include vehicles for aqueous or solvent flexo/gravure ink systems, such as extrusion, adhesive and thermal laminating inks and the inks for surface printing on polyolefin films. They can also be applied in the solvent or water ink systems as pigment dispersants. In publication gravure, the resins of this invention can be utilized in the high hold-out inks for printing on uncoated, light-weight paper stock.

The modified carboxylated polyamide compositions of this invention in the form of an ammonium or amine salt at particularly suitable for use in water-borne printing inks in admixture with a water-soluble ammonium or amine salt of a carboxyl-group-containing styrene and/or acrylic copolymer having a glass temperature in the range of from +20 to +105° C and a molecular weight in the range from 30,000 to 300,000. Preferably the modified polyamide compositions are used in such mixtures in an amount of 5-20, preferably 7-10% w/w of the total binder resin amount. Such water-based surface and lamination printing ink compositions show in printing onto substrates such as plastics substrates superior properties with respect to the printing aptitude and color strength.

In order to produce an ink composition containing the modified carboxylated polyamide composition and the copolymers described in the preceding paragraph in general a vehicle is first prepared by dissolving the copolymer in ammoniated water. Subsequently, this vehicle is mixed with an aqueous solution of the modified carboxylated polyamide composition, and then a pigment of dyestuff is dispersed in the resulting mixture, followed by the addition of wax, antifoaming agent, surfactant(s) and plasticizer and further adding water as the occasion demands to thereby adjust such properties as viscosity, color appearance, etc.

The modified carboxylated polyamide compositions are an essential ingredient in the foundation and are responsible for their good adhesion, cleaning printing, excellent film wetting, and superior resolubility.

The following examples are illustrative of the principle and the practice of this invention although not limited thereto. Parts and percentages used are parts and percentages by weight.

Products used in the examples:

Morez® 100 is a commercially available solid grade styrene/acrylic resin having an acid number of 210 and a softening point of 98° C and sold by the Morton Thiokol Inc., Chicago. It is readily soluble in water and ammonia or amine and in various alcohols.

Joncryl® 67 is an acrylic resin having an acid value of 200 and a softening point of 143° C, sold by S.C.

3

Johnson & Son Inc., Racine, WI, U.S.A.

Joncryl® 80 is a styrene acrylic resin having a similar acid value.

Unirez® 710 is an alcohol soluble maleic resin having a softening point of 145°C and an acid value of 300, sold by Union Camp, Jacksonville, Florida, U.S.A.

Unirez® 2224 is an alcohol soluble thermoplastic polyamide resin having a melting point of about 120°C, sold by Union Camp, Jacksonville, Florida, U.S.A

Versamid® 900 and 930 are solid polyamides prepared by condensation of polymerized linoleic acid with polyamines having a melting point (ASTM 1240) of 180-190°C (Versamid 900) or 105-115 (Versamid 930).

Macromelt® 6239 is a polyamide based hotmelt adhesive sold by Henkel, Düsseldorf.

Unitol® NCY is a tall oil rosin, sold by Union Camp, Jacksonville, Florida, U.S.A.

Acintol® is a tall oil rosin, sold by Arizona Chemical Company, New York, N.Y., U.S.A.

Jonwax 120 is an emulsion of a combination of polyethylene wax and paraffin wax, sold by S.C. Johnson & Son Inc., Racine, WI, U.S.A.

AAOT Yellow Pigment is a Acetoacet-o-toluide, sold by Sun Chemical.

Lucidine® 603 is a fortified latex of a styrene/acrylic ester/acrylic acid copolymer, of which the solution phase resin has an acid no. of about 200.

## EXAMPLE 1

|  | Parts/Weight |  |
|---|---|---|
| A | 5.67 | Gum Rosin (WW) |
| B | 1.33 | Maleic Anhydride |
| C | 21.00 | Polyamide |
| D | 7.00 | Morez 100 |
| E | 4.46 | Ammonia (29%) |
| F | 60.54 | Deionized Water |
|  | 100.00 |  |

The laboratory reactor was charged with A. Heat and nitrogen were turned on. When A was partially melted, the agitation was carefully applied to avoid charring. When A was all fluid, B was added at about 120°-130°C with the heat turned off. The temperature rose spontaneously to about 160-175°C. Heat was reapplied and the temperature was raised to 200°C. It was kept at this level for 2 hours. Item C was then gradually charged into reactor with the heat turned on to permit uninterrupted agitation and prompt melting of this resin. After all of C was melted, the temperature was raised to 230°C and kept at this leval for one hour. Item D was then gradually charged into reactor, with the heat left on, to permit uninterrupted agitation and prompt melting of this resin. After all of D was melted, the temperature was stabilized at 230°C and kept at this level for one hour. The solution of E and F was then added carefully, with the heat and nitrogen blanket turned off, and the reflex condenser turned on. A vigorous agitation was applied. The batch went through a pasty, thick stage. Thereafter, it cleared up and the product became an aqueous solution. A sample was characterized and the batch was adjusted to the required pH and solids.

## EXAMPLE #2

|  | Parts/Weight |  |
|---|---|---|
| A | 5.50 | Gum Rosin (WW) |
| B | 1.29 | Maleic Anhydride |
| C | 20.36 | Macromelt 6239 |
| D | 6.79 | Morez 100 |
| E | 5.70 | Ammonia (29%) |
| F | 60.36 | Deionized Water |
|  | 100.00 |  |

The laboratory reactor was charged with A. The heat and nitrogen were turned on. When A was partially melted, the agitation was carefully applied to avoid charring. When A was completely fluid, B was added at about 120-130°C with the heat turned off. The temperature rose spontaneously to about 160-175°C. The heat was reapplied and the temperature was raised to 200°C. It was kept at this level for 2 hours. Item C was then gradually charged into reactor, with the heat turned on, to permit uninterrupted agitation and prompt melting of this resin. After all of C was melted, the temperature was raised to 230°C and kept at this level for one hour. Item D was then gradually charged into reactor with the heat left on to permit uninterrupted agitation and prompt melting of this resin. After all of D was melted, the temperature was stabilized at 230°C and kept at this level for one hour. The solution of E and F was then added carefully, with the heat and nitrogen blanket turned off, and the reflux condenser turned on. A vigorous agitation was applied. The batch went through a pasty, thick stage. Thereafter, it cleared up and the product became an aqueous solution. A sample was characterized and the batch was adjusted to the required pH and solids.

EXAMPLE #3

|   | Parts/Weight |   |
|---|---|---|
| A | 8.12 | Gum Rosin (WW) |
| B | 1.90 | Maleic Anhydride |
| C | 15.03 | Polyamide |
| D | 10.02 | Joncryl |
| E | 5.84 | Ammonia (29%) |
| F | 59.09 | Deionized Water |
|   | 100.00 |   |

The laboratory reactor is charged with A. The heat and nitrogen are turned on. When A is partially melted, the agitation is carefully applied to avoid charring. When A is completely fluid, B was added at about 120-130°C with the heat turned off. The temperature rises spontaneously to about 160-175°C. The heat is reapplied and the temperature is raised to 200°C. It is kept at this level for 2 hours. Item C is then gradually charged into reactor, with the heat turned on, to permit uninterrupted agitation and prompt melting of this resin. After all of C is melted, the temperature is raised to 230°C and kept at this level for one hour. Item D is then gradually charged into reactor with the heat left on to permit uninterrupted agitation and prompt melting of this resin. After all of D was melted, the temperature was stabilized at 230°C and kept at this level for one hour. (Note: In the case that the batch at this stage should begin to gel irreversibly, add enough A to stop gellation. Abort the batch and discharge the resin). At the end of one hour hold, the solution of E and F is then added carefully, with the heat and nitrogen blanket turned off, and the reflux condenser turned on. A vigorous agitation was applied. The batch went through a pasty thick stage. Thereafter, it cleared up and the product became an aqueous solution. A sample was characterized and the batch was adjusted to the required pH and solids.

EXAMPLE #4

|   | Parts/Weight |   |
|---|---|---|
| A | 8.12 | Gum Rosin (WW) |
| B | 1.90 | Maleic Anhydride |
| C | 15.03 | Polyamide |
| D | 10.02 | Joncryl |
| E | 5.84 | Ammonia (29%) |
| F | 59.09 | Deionized Water |
|   | 100.00 |   |

A laboratory reactor was charged with A. The heat and nitrogen were turned on. When A was partially melted, the agitation was carefully applied to avoid charring. When A was completely fluid, B was added at about 120-130°C with the heat turned off. The temperature rose spontaneously to about 160-175°C. The heat was reapplied and the temperature was raised to 200°C. It was kept at this level for 2 hours. Item C was then charged into reactor, with the heat turned on, to permit uninterrupted agitation and prompt melting of this resin. After all of C was melted, the temperature was raised to 230°C and kept at this level for one hour. Item D was then gradually charged into reactor with the heat left on to permit uninterrupted agitation and prompt melting of this resin. After all of D was melted, the temperature was stabilized at 230°C and kept at this level for one hour. The solution of E and F was then added carefully, with the heat and nitrogen blanket turned off, and the reflux condenser turned on. A vigorous agitation was applied. The batch went through a pasty, thick stage. Thereafter, it cleared up and the product became an aqueous solution. A sample was characterized and the batch was adjusted to the required pH and solids.

EXAMPLE #5

| | Parts/Weight | |
|---|---|---|
| A | 5.67 | Gum Rosin (WW) |
| B | 1.33 | Maleic Anhydride |
| C | 21.00 | Polyamide |
| D | 7.00 | Morez 100 |
| E | 0.49 | Ammonia (29%) |
| F | 6.51 | Deionized Water |
| G | 8.00 | Isopropyl Alcohol |
| H | 3.51 | Ammonia (29%) |
| I | 46.49 | Deionized Water |
| | 100.00 | |

The laboratory reactor was charged with A. The heat and nitrogen were turned on. When A was partially melted, the agitation was carefully applied to avoid charring. When A was completely fluid, B was added at about 120-130°C with the heat turned off. The temperature rose spontaneously to about 160-175°C. The heat was reapplied and the temperature was raised to 200°C. It was kept at this level for 2 hours. Item C was then charged intoreactor, with the heat left on, to permit uninterrupted agitation and prompt melting of this resin. After all of C was melted, the temperature was raised to 230°C and kept at this level for one hour. Item D was then gradually charged into reactor with the heat left on to permit uninterrupted agitation and prompt melting of this resin. After all of D was melted, the temperature was stabilized at 230°C and kept at this level for one hour. The solution of E and F was then added carefully,with the heat and nitrogen blanket turned off, and the reflux condenser turned on. A vigorous agitation was applied. The batch went through a pasty, thick stage. The temperature at this stage was around 80°C. Item G was then added, with caution. (If the temperature were too high the alcohol would boil. After liquefaction in the condenser, it would return to the surface of the batch and form a lake on top of it). After a thorough mixing, to achieve uniformity, the batch was transferred to another reactor that contained the solution of H and I preheated to 75°C. An efficient agitation was applied. A sample was charcterized. The batch was adjusted to the required pH and solids.

ERXAMPLE #6

| | Parts/Weight | |
|---|---|---|
| A | 10.53 | Gum Rosin (WW) |
| B | 2.47 | Maleic Anhydride |
| C | 39.00 | Polyamide |
| D | 13.00 | Morez 100 |
| E | 2.24 | Ammonia (29%) |
| F | 9.00 | Deionized Water |
| G | 5.18 | Ammonia (28%) |
| H | 18.58 | n-Propylalcohol |
| | 100.00 | |

The laboratory reactor was charged with A. The heat and nitrogen were turned on. When A was partially melted, the agitation was carefully applied to avoid charring. When A was completely fluid, B was added at about 120-130°C with the heat turned off. The temperature rose spontaneously to about 160-175°C. The heat was reapplied and the temperature was raised to 200°C. It was kept at this level for 2 hours. Item C was then charged into reactor, with the heat left on, to permit uninterrupted agitation and prompt melting of this resin. After all of C was melted, the temperature was raised to 230°C and kept at this level for one hour. Item D was then gradually charged into reactor, with the heat left on to permit uninterrupted agitation and prompt melting of this resin. After all of D was melted, the temperature was stabilized at 230°C and kept at this level for one hour. The solution of E and F was then added carefully, to avoid solidification of the molten resin or excessive foaming. The heat and nitrogen were turned off and the reflux condenser was turned on. A vigorous agitation was applied. The batch went through a pasty, thick stage. When the temperature was 90°C, or lower item, G was added cautiously to avoid excessive foaming. When the batch temperature was below 88°C (boiling point of n-propyl alcohol/water azeotrope), item H was added gradually, with vigorous agitation. A sample was characterized. The batch was adjusted to the required pH and solids.

## EXAMPLE #7

|   | Parts/Weight |   |
|---|---|---|
| A | 13.00 | Unirez 710 |
| B | 39.00 | Polyamide |
| C | 13.00 | Morez 100 |
| D | 3.72 | Ammonia (29%) |
| E | 12.70 | Deionized Water |
| F | 18.58 | n-Propylalcohol |
|   | 100.00 |   |

The laboratory reactor was charged with A. The heat and nitrogen were turned on. When A was partially melted, the agitator was carefully applied to avoid charring. When A was completely melted, item B was charged into reactor, with the heat left on, to permit uninterrupted agitation and prompt melting of the resin. After all of B was melted, the temperature was raised to 230°C and kept at this level for one hour. Item C was then gradually charged into reactor, with the heat left on, to permit uninterrupted agitation and prompt melting of this resin. After all of C was melted, the temperature was raised to 230°C and kept at this level for one hour. The batch was then cast, let cool to room temperature and characterized.

The chunks of the resin were recharged into reactor. The solution of D, E and F was added. A mild heat was applied. The agitation was started as soon as possible (below the boiling point of the solution). The temperature was raised to about 70-80°C and kept constant. When all of the resin was dissolved, a sample was taken and characterized. The solids and pH were adjusted. The batch was cooled and cast.

## EXAMPLE #8

|   | Parts/Weight |   |
|---|---|---|
| A | 13.00 | Unirez 710 |
| B | 39.00 | Polyamide |
| C | 13.00 | Morez 100 |
| D | 3.71 | Ammonia (29%) |
| E | 12.71 | Deionized Water |
| F | 18.58 | n-Propylalcohol |
|   | 100.00 |   |

The laboratory reactor was charged with A. The heat and nitrogen were turned on. When A was partially melted, the agitator was carefully applied to avoid charring. When A was completely melted, Item B was charged into reactor, with the heat left on, to permit uninterrupted agitation and prompt melting of the resin.

7

After all of B was melted, the temperature was raised to 230°C and kept at this level for one hour. Item C was then gradually charged into reactor, with the heat left on, to permit uninterrupted agitation and prompt melting of this resin. After all of C was melted, the temperature was stabilized at 230°C and kept at this level for one hour. The solution of D and E was then added carefully, to avoid solidification of the molten resin or excessive foaming. The heat and nitrogen were turned off and the reflux condenser was turned on. A vigorous agitation was applied. The batch went through a pasty, thick stage. When the batch temperature was below 88°C (boiling point of n-propyl alcohol/water azeotrope), item F was added gradually, with vigorous agitation. A sample was characterized. The batch was adjusted to the required pH and solids.

EXAMPLE #9

|   | Parts/Weight |                 |
|---|--------------|-----------------|
| A | 10.53        | Gum Rosin       |
| B | 2.47         | Maleic Anhydride |
| C | 39.00        | Polyamide       |
| D | 13.00        | Morez 100       |
| E | 3.72         | Ammonia (29%)   |
| F | 12.70        | Deionized Water |
| G | 18.58        | Isopropylalcohol |
|   | 100.00       |                 |

The laboratory reactor was charged with A. The heat and nitrogen were turned on. A was partially melted. The agitation was carefully applied to avoid localized charring. When A was completely fluid, B was added at about 120-130°C with the heat turned off. The temperature rose spontaneously to about 160-175°C. The heat was reapplied and the temperature was raised to 200°C. It was kept at this level for two hours. Item C was then charged into reactor, with the heat left on, to permit uninterrupted agitation and prompt melting of this resin. After all of C was melted, the temperature was raised to 230°C and kept at this level for one hour. Item D was then gradually charged into reactor, with the heat left on, to permit uninterrupted agitation and prompt melting of this resin. After all of D was melted, the temperature was stabilized at 230°C and kept at this level for one hour. The solution of E and F was then added carefully, to avoid solidification of the molten resin or excessive foaming. The heat and nitrogen were turned off and the reflux condenser was turned on. A vigorous agitation was applied. The batch passed through a pasty, thick stage. When the batch temperature was below 80°C (boiling point of isopropyl alcohol/water azeotrope), item G was added gradually, with vigorous agitation. A sample was characterized. The batch was adjusted to the required pH and solids.

EXAMPLE #10

|   | Parts/Weight |                 |
|---|--------------|-----------------|
| A | 10.53        | Gum Rosin       |
| B | 2.47         | Maleic Anhydride |
| C | 39.00        | Versamid 930    |
| D | 13.00        | Morez 100       |
| E | 3.72         | Ammonia (29%)   |
| F | 12.70        | Deionized Water |
| G | 18.58        | Isopropyl Alcohol |
|   | 100.00       |                 |

The laboratory reactor was charged with A. The heat and nitrogen were turned on. A was partially melted. The agitation was carefully applied to avoid localized charring. When A was completely fluid, B was added at about 120-130°C with the heat turned off. The temperature rose spontaneously to about 160-175°C. The heat was reapplied and the temperature was raised to 200°C. It was kept at this level for two hours. Item C was then charged into reactor, with the heat left on, to permit uninterrupted agitation and prompt melting of this resin. After all of C was melted, the temperature was raised to 230°C and kept at this level for one hour. Item D was then gradually charged into reactor, with the heat left on, to permit uninterrupted agitation and prompt melting of this resin. After all of D was melted, the temperature was stabilized at 230°C and kept at this level for one hour. The solution of E and F was then added carefully, to avoid solidification of the molten resin or excessive foaming. The heat and nitrogen were turned off and the reflux condenser was turned on. A vigorous agitation was applied. The batch passed through a pasty, thick stage. When the batch temperature was below 80°C (boiling point of isopropyl alcohol/water azeotrope), item G was added gradually, with vigorous agitation. A sample was characterized. The batch was adjusted to the required pH and solids.

EXAMPLE #11

|   | Parts/Weight |                 |
|---|---|---|
| A | 10.53 | Gum Rosin |
| B | 2.47 | Maleic Anhydride |
| C | 39.00 | Unirez 2224 |
| D | 13.00 | Morez 100 |
| E | 3.72 | Ammonia (29%) |
| F | 12.70 | Deionized Water |
| G | 18.58 | Isopropyl Alcohol |
|   | 100.00 |  |

The laboratory reactor was charged with A. The heat and nitrogen were turned on. A was partially melted. The agitation was carefully applied to avoid localized charring. When A was completely fluid, B was added at about 120-130°C with the heat turned off. The temperature rose spontaneously to about 160-175°C. The heat was reapplied and the temperature was raised to 200°C. It was kept at this level for two hours. Item C was then charged into reactor, with the heat left on, to permit uninterrupted agitation and prompt melting of this resin. After all of C was melted, the temperature was raised to 230°C and kept at this level for one hour. Item D was then gradually charged into reactor, with the heat left on, to permit uninterrupted agitation and prompt melting of this resin. After all of D was melted, the temperature was stabilized at 230°C and kept at this level for one hour. The solution of E and F was then added carefully, to avoid solidification of the molten resin or excessive foaming. The heat and nitrogen were turned off and the reflux condenser was turned on. A vigorous agitation was applied. The batch passed through a pasty, thick stage. When the batch temperature was below 80°C (boiling point of isopropyl alcohol/water azeotrope), item G was added gradually, with vigorous agitation. A sample was characterized. The batch was adjusted to the required pH and solids.

EXAMPLE #12

|   | Parts/Weight |                 |
|---|---|---|
| A | 10.53 | Gum Rosin |
| B | 2.47 | Maleic Anhydride |
| C | 39.00 | Versamid 900 |
| D | 13.00 | Morez 100 |
| E | 3.72 | Ammonia (29%) |
| F | 12.70 | Deionized Water |
| G | 18.58 | Isopropyl Alcohol |
|   | 100.00 |  |

The laboratory reactor was charged with A. The heat and nitrogen were turned on. A was partially melted. The agitation was carefully applied to avoid localized charring. When A was completely fluid, B was added at about 120-130°C with the heat turned off. The temperature rose spontaneously to about 160-175°C. The heat was reapplied and the temperature was raised to 200°C. It was kept at this level for two hours. Item C was then charged into reactor, with the heat left on, to permit uninterrupted agitation and prompt melting of this resin. After all of C was melted, the temperature was raised to 230°C and kept at this level for one hour. Item D was then gradually charged into reactor, with the heat left on, to permit uninterrupted agitation and prompt melting of this resin. After all of D was melted, the temperature was stabilized at 230°C and kept at this level for one hour. The solution of E and F was then added carefully, to avoid solidification of the molten resin or excessive foaming. The heat and nitrogen were turned off and the reflux condenser was turned on. A vigorous agitation was applied. The batch passed through a pasty, thick stage. When the batch temperature was below 80°C (boiling point of isopropyl alcohol/water azeotrope), item G was added gradually, with vigorous agitation. A sample was characterized. The batch was adjusted to the required pH and solids.

EXAMPLE #13

|   | Parts/Weight |   |
|---|---|---|
| A | 10.17 | Unitol NCY |
| B | 2.83 | Fumaric Acid |
| C | 39.00 | Polyamide |
| D | 13.00 | Morez 100 |
| E | 7.42 | Ammonia (29%) |
| F | 9.00 | Deionized Water |
| G | 18.58 | n-Propyl Alcohol |
|   | 100.00 |   |

The laboratory reactor was charged with A. The heat and nitrogen were turned on. When A was partially melted, the agitation was carefully applied to avoid localized charring. When A was completely melted, B was added at about 130-140°C. The temperature was raised to 200°C. It was kept at this level for two hours and fifteen minutes. Item C was then charged into reactor with the heat left on to permit uninterrupted agitation and prompt melting of this resin. After all of C was melted, the temperature was raised to 230°C and kept at this level for one hour. Item D was then gradually charged into reactor, with the heat left on, to permit uninterrupted agitation and prompt melting of this resin. After all of D was melted, the temperature was stabilized at 230°C and kept at this level for one hour. The batch was then cast and cooled to room temperature.

The resin was broken to chunks and recharged into reactor. The solution of E, F and G is added. The mixture was then heated carefully to 80°C and agitation was started as soon as possible. The agitation was kept on, until all of the solid resin was dissolved. A sample was taken and characterized. Adjustments were made in solids and pH. The product was then cast.

EXAMPLE #14

|   | Parts/Weight |   |
|---|---|---|
| A | 13.00 | Acintol |
| B | 39.00 | Polyamide |
| C | 13.00 | Morez 100 |
| D | 8.15 | Ammonia (29%) |
| E | 8.27 | Deionized Water |
| F | 18.58 | n-Propyl Alcohol |
|   | 100.00 |   |

The laboratory reactor was charged with A. The heat and nitrogen were turned on. When A was partially melted, the agitation was carefully applied to avoid charring. When A was completely melted, item B was charged into reactor, with the heat left on, to permit uninterrupted agitation and prompt melting of the resin. After all of B was melted, the temperature was raised to 230°C and kept at this level for one hour. Item C was then gradually charged into reactor, with the heat left on, to permit uninterrupted agitation and prompt melting of this resin. After all of C was melted the temperature was stabilised at 230°C and kept at this level for one hour. The batch was then cast and cooled to room temperature.

The resin was broken to chunks and recharged into reactor. The solution of D, E and F was added. The mixture was then heated carefully to 80°C and agitation was started as soon as possible. The agitation was kept on, until all of the solid resin was dissolved. A sample was taken and characterized. Adjustments were made in solids and pH. The product was then cast.

## EXAMPLE #15

|   | Parts/Weight |   |
|---|---|---|
| A | 16.80 | Acintol |
| B | 2.70 | Maleic Anhydride |
| C | 32.50 | Polyamide |
| D | 13.00 | Morez 100 |
| E | 10.17 | Ammonia (29%) |
| F | 6.25 | Deionized Water |
| G | 18.58 | n-Propyl Alcohol |
|   | 100.00 |   |

The laboratory reactor was charged with A. The heat and nitrogen were turned on. When A was partially melted, the agitation was carefully applied to avoid localized charring. When A was completely melted, B was added at about 130-140°C. The temperature was raised to 200°C. It was kept at this level for two hours and fifteen minutes. Item C was then charged into reactor with the heat left on to permit uninterrupted agitation and prompt melting of this resin. After all of C was melted, the temperature was raised to 230°C and kept at this level for one hour. Item D was then gradually charged into reactor, with the heat left on, to permit uninterrupted agitation and prompt melting of the resin. After all of D was melted, the temperature was stabilized at 230°C and kept at this level for one hour. The batch was then cast and cooled to room temperature.

The resin was broken to chunks and recharged into reactor. The solution of E, F and G was added. The mixture was then heated carefully to 80°C and agitation was started as soon as possible. The agitation was kept on, until all of the solid resin was dissolved. A sample was taken and characterized. Adjustments were made in solids and pH. The product was then cast.

The following are examples of ink and coating compositions based on the preceding polyamides.

## EXAMPLE #16

The following is an example of an ink suitable for printing on plastic films. The ink is suitable for lamination using an adhesive or extrusion lamination process.

|   | Parts/Weight |   |
|---|---|---|
| A | 14.0 | Phthalocyanine Pigment Green Shade |
| B | 4.0 | Morez 100 |
| C | 1.0 | Ammonia - 29% |
| D | 21.0 | Water |
| E | 30.0 | Polyamide - Example #1 |
| F | 20.0 | Water |
| G | 10.0 | Isopropanol |
| . | 100.00 |   |

Resin B is dissolved in C and D. A slurry of A is made in the above solution and passed through a high speed fine media mill to achieve a good dispersion of the pigment. The finished ink is prepared by mixing components E, F and G into the pigment dispersion.

The ink is reduced to printing viscosity using an 80/20 blend of water and n-propanol.

## EXAMPLE #17

The following is an example of an ink suitable for surface printing flexible plastic films.

|   | Parts/Weight |   |
|---|---|---|
| A | 12.0 | AAOT Yellow Pigment |
| B | 3.5 | Joncryl 67 |
| C | 1.0 | Ammonia - 29% |
| D | 23.5 | Water |
| E | 10.0 | Polyamide - Example #9 |
| F | 20.0 | Joncryl 80 - Styrene-Acrylic Latex |
| G | 5.0 | Jonwax 120 |
| H | 15.0 | Water |
| I | 10.0 | Isopropanol |
|   | 100.00 |   |

Resin B is dissolved in C and D. A slurry of A is made in the preceding solution and passed through a high speed fine media mill to achieve good pigment dispersion. Components E through I are added in the stated order while mixing.

The ink is reduced to printing viscosity using an 80/20 blend of water and n-propanol.

## EXAMPLE #18

The following is an example of an overprint varnish with good adhesion to many different types of substrates including coating paper, films and foils.

|   | Parts/Weight |   |
|---|---|---|
| A | 20.0 | Polyamide - Example #13 |
| B | 1.0 | Ammonia - 29% |
| C | 23.5 | Water |
| D | 5.0 | Microchrystalline Wax Emulsion |
| E | 40.0 | Lucidene 603 |
| F | 0.5 | Silicone Emulsion |
| G | 10.0 | Isopropanol |
|   | 100.00 |   |

Mix A, B and C on a mixing tank. Add D, E, F and G in order while mixing.

The coating composition can be reduced with water or 80/20 water-n-propanol blend prior to application.

## Claims

1. A process for the manufacture of a modified carboxylated polyamide composition comprising the heating of a mixture of a polyamide (A) and a carboxylated resin (B1) and/or carboxylated polymer (B2) at a temperature of from about 180 to about 250°C.

2. A process according to claim 1, wherein reaction is carried out by fusing the reactants (A), (B1) and/or (B2) at a temperature from about 180 to abut 250°C.

3. A process according to claim 1 or 2, wherein a mixture of reactants (B1) and/or (B2) is reacted with the polyamide (A).

4. A process according to any of claims 1 to 3, wherein the polyamide (A) is fused with a mixture of a carboxylated rosin adduct (B1) and a carboxylated polymer being soluble in an aqueous alkaline solvent (B2).

5. A process according to claim 1 or 2, wherein the polyamide (A) is first condensed with a carboxylated rosin (B1) and this intermediate product is then further condensed with a copolymer of an olefinically unsaturated acid having 3 to 5 carbon atoms or its anhydride the copolymer being soluble in an aqueous alcaline solvent (B2).

6. A process as claimed in any of claims 1 to 5, wherein the carboxylated resin (B1) is a maleated, fumarated, itaconated or acrylated rosin.

7. A process as claimed in any of claims 1 to 6, wherein the carboxylated polymer (B2) is a copolymer of an olefinically unsatured acid having 3 to 5 carbon atoms, the copolymer having a weight average molecular weight of 1,000-300,000 and an acid number of 50-500.

8. Modified carboxylated polyamide composition obtainable by a process according to any of claims 1 to 7.

9. An aqueous solution of dispersion of a salt of a modified carboxylated polyamide composition as claimed in claim 8 obtainable by neutralizing at least some of the carboxyl groups with ammonia and/or an hydrophylic amine and dissolving or dispersing in water.

10. Printing inks containing a modified carboxylated polyamide composition as claimed in claim 8 or an aqueous solution or dispersion of a salt thereof as claimed in claim 9.